# EUROPEAN PATENT APPLICATION

(11) **EP 4 197 608 A1**
(43) Date of publication of application: **21.06.2023**
(21) Application number: 22208775.1
(22) Date of filing: 22.11.2022
(51) Int. Cl.: A63F 13/22, A63F 13/211, A63F 13/214, A63F 13/215, A63F 13/218, A63F 13/285, A63F 13/428, G06F 3/01

(54) **INTERACTION MODIFICATION SYSTEM AND METHOD**

(30) Priority: 15.12.2021 GB 202118167
(71) Applicant: Sony Interactive Entertainment Inc., Tokyo 108-0075 (JP)
(72) Inventor: ANTHONY, Mark, London, W1F 7LP (GB); RYAN, Nicholas, London, W1F 7LP (GB); VILLANUEVA-BARREIRO, Marina, London, W1F 7LP (GB); ARMSTRONG, Calum, London, W1F 7LP (GB)
(74) Representative: D Young & Co LLP

(57) **Abstract**

A system for modifying interactions between a user and displayed content, the system comprising an input detection unit operable to detect one or more inputs from a peripheral device operated by a user, an input characterisation unit operable to characterise the detected one or more inputs, and a content modification unit operable to modify one or more aspects of the user's interaction in dependence upon the characterisation of the detected inputs.

## Description

### BACKGROUND OF THE INVENTION

### Field of the invention

This disclosure relates to an interaction modification system and method.

### Description of the Prior Art

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly or impliedly admitted as prior art against the present invention.

In recent years there has been a significant growth in the market for peripherals for interacting with electronic devices such as mobile phones, televisions, and game consoles. Such peripherals may be tailored to specific users' needs or desires, such as the provision of extra buttons or the relocation of buttons (for instance, the addition of paddles on the rear of a controller to replace the functions of the more common shoulder buttons or the like). While this can be beneficial for users, such peripherals may be rather costly and as such unable to be obtained by many users. This is particularly true in the case in which a user wishes to obtain a variety of different peripherals for different purposes, as this can increase the cost several times over.

The ability to provide a more tailored user interaction experience is of increasing importance over time as the number of users interacting with such content is increasing significantly. For instance, the number of players playing video games has increased to number in the billions - demonstrating that there are a large number of users interacting with content on electronic devices. With increasing numbers, and a corresponding increase in the variety of demands associated with a larger player-base, it has become increasingly difficult to provide peripherals that are suitable for a suitably large proportion of the environment - due to the increase and variety in those using peripherals, a one-size-fits-all approach to peripherals may be becoming less appropriate.

With many gamers being more casual players, the costs associated with obtaining specialised or tailored peripherals may be seen as being prohibitive or at least difficult to justify. Therefore modifications to existing peripherals have been considered appropriate in earlier examples. For instance, a user of a computer may be able to vary the sensitivity of their mouse - thereby enabling a more tailored experience without obtaining new hardware. Similarly, key remapping for a keyboard is an option that is able to be utilised in existing arrangements.

However, it is considered that such modifications may not be suitable in many cases, as this can limit the changes that are able to be made and may require significant user input to obtain a desired functionality.

It is in the context of the above discussion that the present disclosure arises.

### SUMMARY OF THE INVENTION

This disclosure is defined by claim 1.

Further respective aspects and features of the disclosure are defined in the appended claims.

It is to be understood that both the foregoing general description of the invention and the following detailed description are exemplary, but are not restrictive, of the invention.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figure 1 schematically illustrates a first games controller;
Figure 2 schematically illustrates a second games controller
Figure 3 schematically illustrates an interaction modification method;
Figure 4 schematically illustrates an actuator and trigger of the first games controller;
Figure 5 schematically illustrates a system for modifying interactions; and
Figure 6 schematically illustrates a method for modifying interactions.

### DESCRIPTION OF THE EMBODIMENTS

Referring now to the drawings, wherein like reference numerals designate identical or corresponding parts throughout the several views, embodiments of the present disclosure are described.

Embodiments of the present disclosure relate to systems and methods for modifying user interactions with devices, so as to increase the operability and interactivity of the devices. Such modifications can be used to improve a user's enjoyment of content, such as video games, as well as enabling a more reliable and accurate input to that content by the user. In some cases, it may also be considered that the longevity of hardware may be increased through the reduction in potentially damaging interactions.

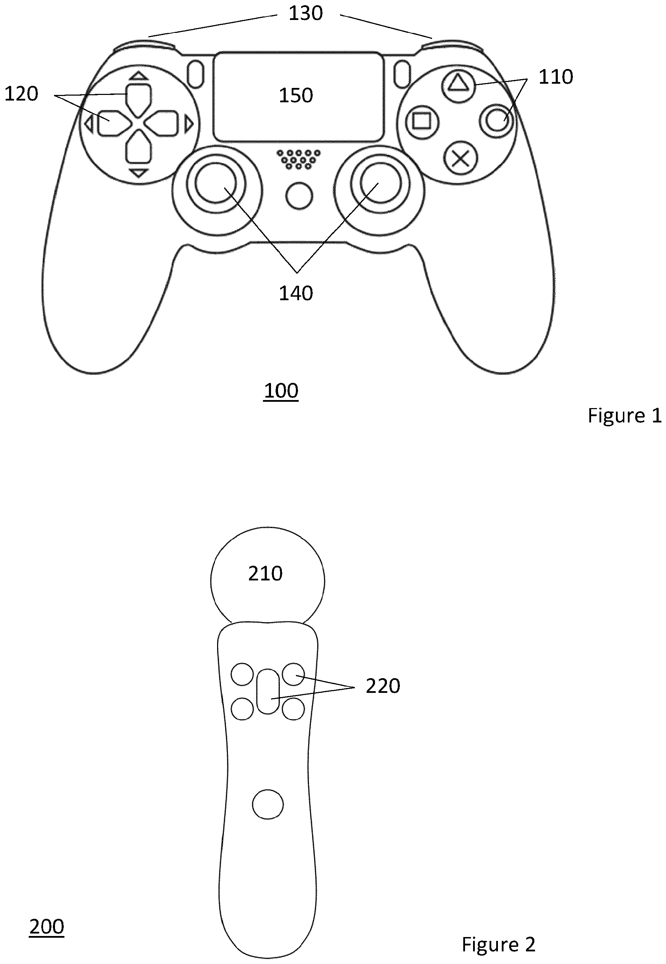

Figure 1 schematically illustrates a first games controller as an example of a peripheral (in this case, an interaction device). The controller 100 comprises a plurality of buttons 110 as well as buttons 120 for providing directional inputs. In addition to these, the exemplary controller 100 comprises triggers 130 located in the 'shoulder area' of the controller 100, as well as a pair of analogue joysticks 140 and a touch-sensitive panel 150. Each of these features 110-150 may be used by a user to input commands to a device, such as a games console, and as such may be referred to as input elements (that is, elements of a peripheral operable to provide an input). Further inputs may also be provided through the sensing of the motion of the controller (for example, using an accelerometer embedded within the controller, or an image-based tracking of the controller), as well as the sensing of audio via a microphone associated with the controller.

Figure 2 schematically illustrates a second games controller as an example of an interaction device. This is an example of a controller having a different form factor to that of the controller in Figure 1; this difference in form is due to a different intended use case. In particular, the controller 200 of Figure 2 is intended to be used in an arrangement in which image-based motion tracking is performed, with the sphere 210 being illuminated during use so as to act as a recognisable marker within the images. The buttons 220 may be provided to enable additional functionality, such as providing a simplified method of selecting an indicated object in a graphical user interface. Such a controller 200 may also be provided with sensors, such as accelerometers, that are operable to determine motion and/or orientation of the controller 200, as well as additional input functionality such as a microphone for detecting audio inputs by a user.

Each of these controllers may be operable to communicate with a processing device via any suitable wired or wireless link. In some embodiments, multiple controllers may be associated with a single processing device, for example during a multiplayer gaming session. In the case in which multiple controllers are associated with a single processing device, it is not necessary that each of the controllers is identical; different types of controllers/peripherals may be used to provide inputs, and each may have a different configuration such that identical inputs from identical controllers do not necessarily have the same effect on processing (such as performing different actions in a game).

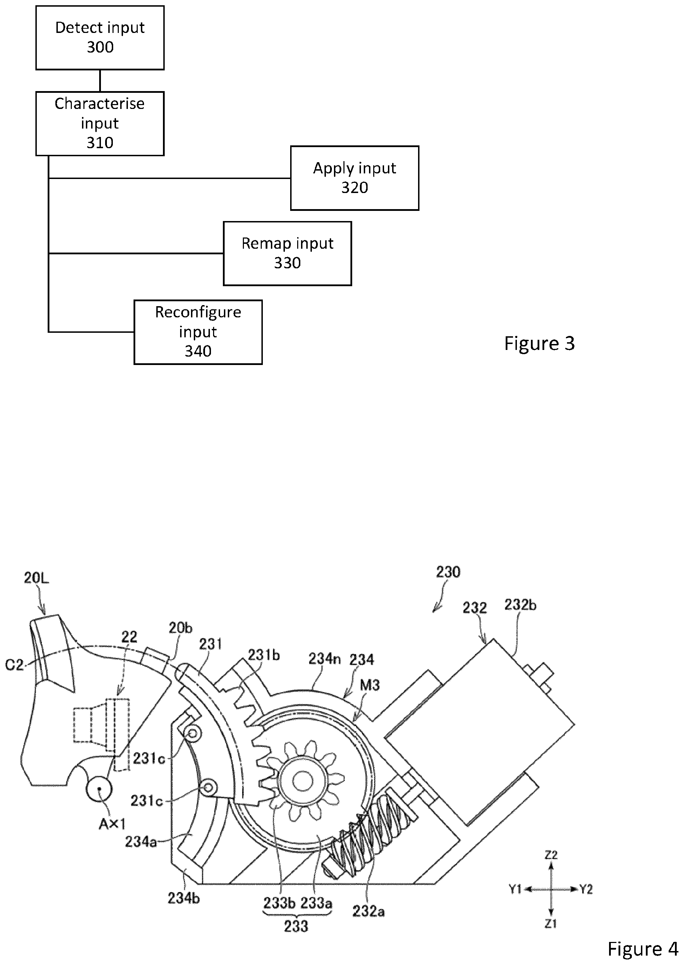

In many cases, it may be considered advantageous that interactions of a user with content (using a controller/peripheral such as those of Figures 1 and 2) are able to be tailored for that user. Embodiments of this disclosure are directed towards improving the interactions of a user with content in a personalised manner; that is, in a manner that is specific to a particular user's interactions. Figure 3 schematically illustrates an example of a method in accordance with one or more embodiments of the present disclosure.

At a step 300, one or more inputs by a user of a peripheral is detected. This may comprise any suitable inputs for a particular peripheral; examples include button presses, joystick manipulation, audio inputs, and/or motion inputs. These inputs are generally provided for the purpose of interacting with content (such as a video game or other application), although this is not required - for instance, inputs may be provided in response to a stimulus (such as a reflexive motion when a user is scared).

At a step 310, a characterisation of the detected inputs is performed. This characterisation may be made in dependence upon any suitable criteria; examples include a response time of the inputs to a corresponding element within content displayed to a user, a force associated with the inputs, a magnitude of the inputs, a repetition of the inputs, and an accuracy of the inputs. The characterisation of the inputs may be made in isolation, in combination with one or more additional inputs (that is, on the basis of two or more inputs provided by a user), and/or in dependence upon a plurality of inputs by a user over a period of time (such as throughout a play session, the last week/month/year, or any other period of time).

Following step 310, processing may proceed to any one or more of the three steps described below. While each of the steps may be performed in combination, it should be appreciated that each of the steps are functionally distinct in that a different effect is provided by each step. In the case in which multiple steps are performed, they may be performed in any suitable order; there is no requirement to perform the steps in ascending numerical order or the like.

A step 320 comprises applying one or more inputs to content being interacted with by the user. This can be considered to be a 'normal' interaction by the user, in which they press a button (or provide another input) and an action corresponding to the button (or other input) is performed by an element within the content. An action may of course be considered to be any appropriate processing in response to an input by a user - interacting with content does not require any elements to perform actions. For instance, a user may provide inputs to interact with a spreadsheet in which it is not considered that any element performs an action as such.

A step 330 comprises performing a remapping of one or more inputs so as to vary the output associated with a particular input of the peripheral device. This may be considered to be a software-based modification in response to an input, with the modification not being related to the processing of the content performed in response to an input as in step 320.

In a first example, this remapping may comprise a varying of the responsiveness of an output to a particular input. This may be particularly applicable to inputs in which a graduated response may be identified - such as a trigger or button in which a partial operation can be identified (that is, rather than being limited to a binary operation state). Similarly, a joystick or a motion input may also be suitable inputs for such a feature in that they are inputs comprising a magnitude component which can correspond to a magnitude of an output. The responsiveness variation may comprise a remapping of the amount of input versus the amount of output - for instance through the use of a gearing ratio or the like. This variation may be performed with any suitable values, and the variation may increase or decrease the responsiveness.

Rather than being limited to a manipulation of a particular element of the peripheral, the interactions may include the manipulation of the entire peripheral - for instance, in motion tracking of the entire peripheral (or a particular portion of the peripheral, such as the illuminated portion 210 of Figure 2). In this case, the remapping may comprise the application of a scaling or gearing to the motion, or the assigning of different functions to different gestures. This may be particularly helpful for those users with limited mobility, as this can be used to reduce the range of motion required and/or to simplify interactions.

A variation of the responsiveness may be considered to be any change in which the magnitude of an output is varied with respect to a given input - for instance, to increase or decrease the output. This may be performed using a linear mapping or a non-linear as appropriate. In some cases, this may comprise the modification of a threshold for an action to be performed - for instance, instead of a halfpress being sufficient to cause an action to be performed, a two-thirds-press may be required.

Alternatively, or in addition, the remapping may comprise a varying of the correlation between particular inputs and outputs. For instance, reassigning one or more actions from a first input to a second input may be performed - an example of this is reassigning a function from a first button 110 in Figure 1 to a second button 110.

A further alternative, or additional, example of remapping is that of a recalibration of an input with an output. For instance, if a user has provided an input via a joystick or the like that does not correspond with an expected action then a recalibration may be performed to ensure that the inputs are being accurately mapped to outputs. Such a recalibration may be performed to any directional input, including motion-based inputs by a user in which a recalibration of the tracking may be performed.

An additional example of remapping that may be used instead of, or in conjunction with, the above is that of assigning plural functions to a single input. For instance, a particular key sequence may be assigned to an input element in the manner of a macro key. This can enable a user with limited mobility to still provide complex inputs, for example, or may assist in making content easier to interact with through chaining inputs.

A step 340 comprises performing a reconfiguration of one or more inputs of the peripheral device used to provide the inputs. This differs from the remapping of step 330 in that one or more physical changes to the operation of the input device are implemented. This may include any physical changes as appropriate for a particular input device - examples include varying a level of resistance a button or other element offers to a user when providing inputs, or modifying the operational range of a button or other element.

In some cases, a physical element may have a dual operation mode (or more than two operation modes) and the relationship between the modes may be modified as appropriate. For instance, a trigger button may act as a variable input for a first level of input by a user and as a button for a second level of input - for instance, a user may depress a trigger to perform a first function and if depressed past a threshold the trigger may 'click' and instead provide a second function comparable to a button input. In such a case, the threshold for generating the second input may be varied as appropriate for a given implementation.

The modifications that are envisaged in steps 330 and 340 may be implemented automatically (that is, without specific user input) in dependence upon the characteristics as described above. This dependence may, for example, be based upon an absolute value of the characteristics, a comparison of a value to a threshold value defined for particular inputs, and/or historical values for a particular user or group of users. In general, the modifications are intended to enable an improved operability of the peripheral by providing an improved input-output mapping and/or by enabling an improved operation range of a particular input element for a particular user (for instance by making it easier to operate, thereby increasing the operational range, or by modifying an input/output ratio).

Considering the absolute value of the characteristics, it may be determined that if a user only performs an input with a limited range of motion then modifications can be made in dependence upon this. For instance, an improved scaling of input to output may be implemented to enable an improved interaction by the user. Alternatively, the operational range of an input element may be increased for a user - for instance by reducing a level of resistance to operation for the element, or by moving the element to a position that is easier for the user to manipulate.

Considering a comparison to a threshold value, it may be determined that a user is providing an input with an excessive amount of force or with too little force. In response to this the resistance to operation for the element may be increased (or decreased) so as to enable a normalised range of operation for a user (normalised here meaning a range of operation expected or desired for a typical user, for instance). This may be advantageous in improving the operability of the peripheral for the user, as well as potentially reducing the likelihood of damage to the controller by forceful operation of input elements.

In some cases, it may also be considered appropriate to modify the content being presented to the user; this may be in response to excessively hard button presses or the like that may be indicative of a high level of frustration of the user. This may be advantageous both in improving the user experience and in preserving the functionality of the peripheral and the input elements.

Considering historical values, it may be determined that a user has changed their interactions with the input elements of a peripheral over time. In response to this, modifications to the mapping or configuration can be provided that are intended to account for this change. For instance, a particular input element may become easier to operate throughout a play session if it is determined that the operation range or force as decreased (as this may indicate fatigue) - this is an example of short-term historical data being used. In the case of more long-term historical values it may be considered that a user has become more (or less, if they have not played for a long period of time) proficient with a controller, which can provide an opportunity for an improved user experience through modifications. For instance, if a user has demonstrated a high level of proficiency (for instance, consistently providing accurate and/or precise inputs) with a particular input element the element can be modified (or the mapping changed) so as to enable a higher degree of sensitivity to be realised.

It is also considered that that context of the input may be a factor when determining a modification to be made. For instance, if a user exhibits an above-threshold movement input at a time that indicates it is a response to a stimulus (such as haptic feedback or an in-content feature) then it may be considered that modifications should be made in accordance with this. For example, if a user exhibits particular motion in response to haptic feedback then it may be determined that the haptic feedback is too strong and therefore an adjustment may be made to reduce the amount of haptic feedback that is provided. Similarly, other inputs such as audible exclamations or dropping of a controller may be identified as being representative of such a reaction. This modification may be performed in a software-based manner or a hardware-based manner as appropriate for a particular implementation, and as such could be implemented as a part of either of steps 330 and 340.

Figure 4 schematically illustrates a trigger mechanism associated with a games controller such as those shown in Figures 1 and 2. This mechanism is considered to be entirely exemplary, with the teachings provided in this disclosure being applicable to any other input elements as appropriate. The mechanism of Figure 4 is simply provided as an example of an arrangement in which a reconfiguration of a peripheral (or at least one input element associated with the peripheral) may be performed so as to provide a materially different physical interaction for a user.

In this Figure, an actuator 230 has a button drive member 231 that contacts the contact portion 20b of the manipulation button (trigger) 20L, and moves the manipulation button 20L. In addition, the actuator 230 has an electric motor 232 (in a housing 232b) which is a driving source to move the button drive member 231, the transmission mechanism M3 that transmits motive power of the electric motor 232 to the button drive member 231, and a case 234 (comprising at least a first part 234n) holding the electric motor 232, the transmission mechanism M3 and the button drive member 231. The electric motor 232 is positioned opposite to the manipulation button 20L, with the button drive member 231 and the transmission mechanism M3 being sandwiched between the electric motor 232 and the manipulation button 20L.

The button drive member 231 of the actuator 230 is movable along an arc C2 centred on the rotation centre Ax1. The button drive member 231 further comprises a plurality of projecting contact portions 231c which can be arranged in grooves to guide the motion of the button drive member 231. The button drive member 231 applies, to the manipulation button 20L, a force in an opposite direction to a direction in which the user pushes the manipulation button 20L. In this manner, a resistance to the operation by the user may be provided by providing this force at the time of operation. By varying the magnitude of this force, by varying the output of the electric motor 232 that drives the button drive member 231, the resistance to operation can be varied to enable an easier or more difficult operation by a user (that is, an operation that requires a lesser or greater force to be applied by the user).

When the manipulation button 20L is at its initial position, a gap may be provided between the button drive member 231 and the contact portion 20b of the manipulation button 20L, or the button drive member 231 and the contact portion 20b may be in contact with each other. As illustrated in Figure 4, when the manipulation button 20L is seen in the direction of the rotation centre line Ax1, the contact portion 20b is positioned opposite to the rotation centre line Ax1, with a sensor 22 being sandwiched between the contact portion 20b and the rotation centre line Ax1.

The actuator 230 has guides 234a, formed on the case 234, that define the direction in which the button drive member 231 moves due to the presence of the projecting contact portions 231c. The button drive member 231 is slidable along the guides 234a while staying in contact with the manipulation button 20L. The guides 234a are formed such that the button drive member 231 slides along the arc C2. Accordingly, the button drive member 231 slides in the same direction as the direction in which the contact portion 20b moves. The actuator 230 also includes a sensor 235 for sensing the position of the button drive member 231 (i.e., the rotation position of the electric motor 232).

The button drive member 231 may have a movable range larger than the movable range of the manipulation button 20L. In Figure 4 the maximally-pressed position of the manipulation button 20L is defined by the presence of a stopper 234b so as to prevent further pressing motion. In a state where the manipulation button 20L is at its maximally-pressed position, the button drive member 231 is further slidable in the direction away from the contact portion 20b (in other words, it can be retracted further). By moving the button drive member 231 into this retracted state, the manipulation button 20L can be manipulated in a manner free from a reaction force from the actuator 230L due to the lack of contact. Furthermore, in a state where the manipulation button 20L is at its maximally-pressed position, the button drive member 231 can be caused to hit the manipulation button 20L after the button drive member 231 is accelerated by the electric motor 232. As a result, the impact can be transmitted to the manipulation button 20L more easily, and this impact can provide haptic feedback to the user.

The transmission mechanism M3 includes a gear 233 including a large diameter gear 233a, and a small diameter gear 233b having a diameter smaller than that of the large diameter gear 233a. A rack 231b is formed on the button drive member 231, and the small diameter gear 233b functions as a pinion gear that engages with the rack 231b. In addition, a gear 232a which engages with the large diameter gear 233a is attached to the rotation axis of the electric motor 232. The structure of the transmission mechanism M3 is not limited to that in the example of the actuator 230. For example, the gear 232a attached to the electric motor 232 may engage with a gear of the button drive member 231 directly.

The above description of Figure 4 provides an example of a functional arrangement that can be used in embodiments of the present disclosure. In particular, it is noted that the electric motor 232 can be controlled so as to modify the motive force that is generated and in turn applied to the manipulation button 20L. By reducing the output of the electric motor 232 (for instance, by reducing a current provided to the electric motor 232), the force applied to the manipulation button 20L can be reduced; thereby reducing the force required by a user to depress the manipulation button 20L, and subsequently increasing the amount of the operational range of the manipulation button 20L that is able to be used for a given value of input force. The inverse also holds true, in that by increasing the output of the electric motor 232 the force applied to the manipulation button 20L can be increased and therefore the force required for the user to utilise the same operational range is increased.

Of course, in other arrangements a similar effect may be obtained through other means - in the case in which a number of different gears of varying sizes is provided, a different gear for transferring the force may be selected so as to vary the force applied to the manipulation member. Similarly, elastic or deformable elements (such as an inflatable cushion-type element or bands with varying lengths) may be provided to similarly vary the amount of resistive force applied to the manipulation member.

This is an example of a reconfiguration of an input element (the manipulation button 20L) of a peripheral so as to modify an aspect of a user's interaction in dependence upon the characterisation of that user's inputs. Such a modification to the operation of the electric motor 232 may be implemented by the peripheral itself (such as by an integrated processing unit) or by an associated device such as a games console.

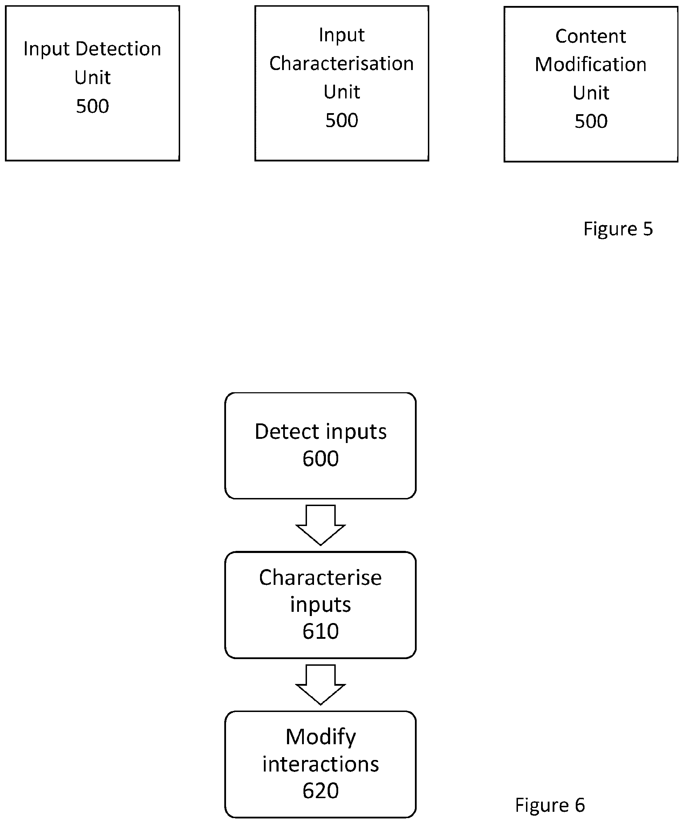

Figure 5 schematically illustrates a system for modifying interactions between a user and displayed content. The system comprises an input detection unit 500, an input characterisation unit 510, and a content modification unit 520. These units can be implemented using any suitable processing elements, such as one or more CPUs, and may be provided in an integrated or distributed manner. For example, one or more of the units may be located at the peripheral and/or one or more of the units may be located at processing devices such as computers, games consoles, mobile phones, and/or servers in any suitable configuration. The devices which perform the operations below need not be the device with which the peripheral is interacting; in other words, the processing may be performed by a third device that is not a part of the interaction with content.

The input detection unit 500 is operable to detect one or more inputs from a peripheral device operated by a user. In some embodiments, the peripheral device is a game controller (for instance, controllers such as those shown in Figures 1 and 2); however, any peripheral that may be used to provide an input to control processing may be considered. In some embodiments, the peripheral may be integrated with the content reproducing device, such as in the examples of a mobile phone, portable games console, or laptop.

The inputs may comprise any one or more of button presses, trigger depressions, motion, audio, and touch inputs. Any other type of input may also be considered appropriate so long as it can be identified and used to control processing, rather than being limited to the examples presented here. These may be specific commands to control the processing of a particular application or video game, or may be inputs generated by a user's response to particular stimuli such as audio, visual, or haptic feedback elements.

The inputs may be detected over a period of time; in some cases this may be over a single play session (or a portion of a play session), while in others a longer period of time may be considered suitable. For example, detected inputs may be monitored over a period of hours, days, weeks, months, years or any other time intervals as appropriate.

The input characterisation unit 510 is operable to characterise the detected one or more inputs. In some embodiments, the input characterisation unit 510 is operable to characterise inputs in dependence upon a plurality of inputs by the user over time - in other words, the characterisation of a particular input may be made in dependence upon earlier inputs by the same user. Similarly, previous inputs by other users (such as a representative group of users) may be considered when performing the characterisation.

The input characterisation unit 510 may be operable to characterise inputs in dependence upon one or more parameters of the input itself. For instance, the input characterisation unit 510 may be operable to characterise inputs in dependence upon a duration and/or force of the input; alternatively, or in addition, other parameters such as a force profile (a rate of change of force throughout the input) or factors not directly related to the inputs (such as a rotation of the peripheral during a button press) may be considered. Each or any of these factors may be considered (in isolation or in combination) to be indicative of a user's ability to provide an input or their manner of providing such an input. For instance, considering unnecessary motions such as a rotation of a peripheral during a button press (in which the rotation has no effect) may indicate that a user is having to work harder to provide the input (the button press) and that as such adaptations should be made to the input process for that user.

In some embodiments, the input characterisation unit 510 may be operable to characterise inputs in dependence upon the proportion of the operational range of a particular input element of the peripheral device that is utilised by detected inputs. For instance, in the case of a trigger being pulled the input may be characterised in terms of the percentage of the operational range that is utilised - that is, an input may be considered in terms of what percentage (or other measure) of the maximum input was provided.

In some cases, it may be considered advantageous for the input characterisation unit 510 to be operable to characterise inputs in dependence upon the context in which the input is provided. For instance, determining whether the user is attempting to interact with an element or is simply responding to a new stimulus can be advantageous in characterising inputs. Similarly, the context may be useful in determining whether a user is not utilising the full operational range of an input element through difficulty doing so, or through a particular passage of gameplay not requiring the utilisation (for example).

The input characterisation unit 510 may also, or instead, be operable to characterise inputs in dependence upon a determined dexterity or mobility of the user. For instance, information may be provided by a user indicating their dexterity or mobility (such as how well they are able to perform certain movement or manipulations). Alternatively, or in addition, measurements may be made as a part of a calibration process, or these factors may be inferred based upon data about user interactions gathered over time. This inferring may be based upon average operation parameters, for example.

The content modification unit 520 is operable to modify one or more aspects of the user's interaction in dependence upon the characterisation of the detected inputs. This modification can be performed so as to increase the ability of a user to fully interact with a peripheral, for example by allowing the use of an improved button mapping for that user or by reducing a resistance to operation of an input element such as a trigger. Alternatively, or in addition, this may be performed so as to increase a user's performance - such as by increasing a user's reaction time (using a remapping to make some functions more accessible, for example), or by reconfiguring input elements to enable a more precise and/or accurate input to be provided.

In some embodiments, the content modification unit 520 is operable to remap one or more inputs and/or outputs in dependence upon the characterisation of the detected inputs. This remapping may be performed at the peripheral, such that a different output signal is generated for a particular input from a user, and/or at a games console or the like that receives the input. The remapping may be considered to be any modification to the relationship between an operation by a user (that is, the provision of an input) and an effect caused by that input (that is, an output associated with the provided input).

Alternatively, or in addition, the content modification unit 520 is operable to reconfigure one or more input elements of the peripheral device in dependence upon the characterisation of the detected inputs. In some example, reconfiguring one or more input elements of the peripheral device comprises increasing or decreasing a resistance to operation of at least one input element, such as a trigger element. This reconfiguration is performed by modifying how a user interacts with the input element or peripheral itself. In some examples this may be achieved by varying a current applied to an electric motor to generate a varying resistance (such as in the example described with reference to Figure 4); alternatively, or in addition, the use of pulleys, gears, elastic elements, and/or inflatable (or otherwise deformable) elements may be considered suitable for providing such a reconfiguration as each of these can be used to modify how a user interacts with an input element.

In a further alternative or additional aspect, the content modification unit 520 may be operable to vary the intensity of haptic feedback provided by the peripheral device in dependence upon the characterisation of the detected inputs. This may be performed through hardware or software means as appropriate for a given peripheral. In some embodiments this may be performed in response to a determination that the user reacts too strongly to haptic feedback (such as jumps or releases the controller), or too weakly (doesn't react at all), or simply in response to direct user feedback.

The arrangement of Figure 5 is an example of a processor (for example, a GPU and/or CPU located in a games console or any other computing device) that is operable to modify interactions between a user and displayed content, and in particular is operable to:
detect one or more inputs from a peripheral device operated by a user;
characterise the detected one or more inputs; and
modify one or more aspects of the user's interaction in dependence upon the characterisation of the detected inputs.

Figure 6 schematically illustrates method for modifying interactions between a user and displayed content in accordance with one or more embodiments of the present disclosure.

A step 600 comprises detecting one or more inputs from a peripheral device operated by a user.

A step 610 comprises characterising the detected one or more inputs.

A step 620 comprises modifying one or more aspects of the user's interaction in dependence upon the characterisation of the detected inputs.

The techniques described above may be implemented in hardware, software or combinations of the two. In the case that a software-controlled data processing apparatus is employed to implement one or more features of the embodiments, it will be appreciated that such software, and a storage or transmission medium such as a non-transitory machine-readable storage medium by which such software is provided, are also considered as embodiments of the disclosure.

Thus, the foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. A system for modifying interactions between a user and displayed content, the system comprising:
an input detection unit operable to detect one or more inputs from a peripheral device operated by a user;
an input characterisation unit operable to characterise the detected one or more inputs in dependence upon a duration and/or force of the input; and
a content modification unit operable to modify one or more aspects of the user's interaction in dependence upon the characterisation of the detected inputs, wherein the content modification unit is operable to reconfigure one or more input elements of the peripheral device in dependence upon the characterisation of the detected inputs.

2. A system according to claim 1, wherein the inputs comprise one or more of button presses, trigger depressions, motion, audio, and touch.

3. A system according to any preceding claim, wherein the peripheral device is a game controller.

4. A system according to any preceding claim, wherein the input characterisation unit is operable to characterise inputs in dependence upon a plurality of inputs by the user over time.

5. A system according to any preceding claim, wherein the input characterisation unit is operable to characterise inputs in dependence upon the proportion of the operational range of a particular input element of the peripheral device that is utilised by detected inputs.

6. A system according to any preceding claim, wherein the input characterisation unit is operable to characterise inputs in dependence upon the context in which the input is provided.

7. A system according to any preceding claim, wherein the input characterisation unit is operable to characterise inputs in dependence upon a determined dexterity or mobility of the user.

8. A system according to any preceding claim, wherein the content modification unit is operable to remap one or more inputs and/or outputs in dependence upon the characterisation of the detected inputs.

9. A system according to claim 1, wherein reconfiguring one or more input elements of the peripheral device comprises increasing or decreasing a resistance to operation of at least one input element.

10. A system according to any preceding claim, wherein the content modification unit is operable to vary the intensity of haptic feedback provided by the peripheral device in dependence upon the characterisation of the detected inputs.

11. A method for modifying interactions between a user and displayed content, the method comprising:
detecting one or more inputs from a peripheral device operated by a user;
characterising the detected one or more inputs in dependence upon a duration and/or force of the input; and
modifying one or more aspects of the user's interaction in dependence upon the characterisation of the detected inputs, wherein the modification comprises reconfiguring one or more input elements of the peripheral device in dependence upon the characterisation of the detected inputs.

12. Computer software which, when executed by a computer, causes the computer to carry out the method of claim 11.

13. A non-transitory machine-readable storage medium which stores computer software according to claim 12.
